# EUROPÄISCHE PATENTSCHRIFT

(11) **EP 2 205 849 B1**
(45) Veröffentlichungstag und Bekanntmachung des Hinweises auf die Patenterteilung: **07.03.2018**
(21) Anmeldenummer: 08802290.0
(22) Anmeldetag: 17.09.2008
(51) Int. Cl.: F02M 26/00, F02M 35/10, F02B 29/00, F02M 26/05, F02M 26/17, F02M 26/36, F02M 26/47

(54) **VERFAHREN UND VORRICHTUNG ZUM VERBESSERN EINER ABGASRÜCKFÜHRUNG EINER VERBRENNUNGSKRAFTMASCHINE**
METHOD AND DEVICE FOR IMPROVING A RECIRCULATION OF EXHAUST GAS IN AN INTERNAL COMBUSTION ENGINE
PROCÉDÉ ET DISPOSITIF POUR AMÉLIORER LE RECYCLAGE DES GAZ D'ÉCHAPPEMENT D'UN MOTEUR À COMBUSTION INTERNE

(30) Priorität: 24.09.2007 DE 102007045623
(43) Veröffentlichungstag der Anmeldung: 14.07.2010
(73) Patentinhaber: KNORR-BREMSE Systeme für Nutzfahrzeuge GmbH, 80809 München (DE)
(72) Erfinder: GERUM, Eduard, 83026 Rosenheim (DE)
(74) Vertreter: Mattusch, Gundula
(86) Internationale Anmeldenummer: PCT/EP2008/007765
(87) Internationale Veröffentlichungsnummer: WO 2009/040041

(56) Entgegenhaltungen:
- EP-A- 1 213 467
- DE-A1- 4 319 380
- DE-C1- 4 235 794
- DE-C1- 4 429 232
- US-A- 4 270 508

## Beschreibung

Die Erfindung betrifft ein Verfahren und eine Vorrichtung zum Verbessern einer Abgasrückführung einer Verbrennungskraftmaschine, insbesondere eines Dieselmotors, mit einem Abgasturbolader.

Eine Rückführung von Abgasen wird als eine Möglichkeit zur Reduzierung von Schadstoffemissionen, wie beispielsweise Stickstoffoxide NOₓ, bei Verbrennungskraftmaschinen verwendet. Dabei wird eine Teilmenge der Abgase der Verbrennungskraftmaschine wieder in deren Ansaugsystem zurückgeführt, wobei zum Beispiel ein Abgasrückführungsventil auf- und zugesteuert wird. Verbrennungskraftmaschinen, wie zum Beispiel Dieselmotoren werden häufig mit Abgasturboladern ausgerüstet.

Bei der Abgasrückführung können jedoch im instationären Bereich Zustände auftreten, bei welchen der Abgasdruck nicht ausreicht, um die über die Abgasrückführung entnommene Teilmenge in die Ansaugleitung bzw. den Ansaugkrümmer der Verbrennungskraftmaschine zu fördern. Bei einem solchen Betriebszustand ist dann ein zu hoher Gehalt an NOₓ in den Abgasen eine Folgeerscheinung.

Derartige Verbrennungskraftmaschinen, zum Beispiel Kolbenmaschinen wie Dieselmotoren, mit Abgasturbolader weisen zum Beispiel einen Betriebszustand beim Beschleunigen auf, der als "Turboloch" bezeichnet wird. Hierbei reagiert die Verbrennungskraftmaschine beim Gasgeben mit einer Drehzahlerhöhung erst nach einer bestimmten Verzögerungszeit, in welcher keine Abgasenergie, d.h. auch kein genügender Abgasdruck, zum Antrieb des Abgasturboladers und somit kein komprimiertes Frischgas zur Verfügung steht. Zur Überbrückung dieses "Turbolochs" sind Lösungsvorschläge gemacht worden, welche die Offenlegungsschriften DE 10 2006 008 783 A1 und DE 10 2006 785 A1 beschreiben. Hierbei wird Druckluft, zum Beispiel aus einem Druckluftspeicher, gesteuert in die Ansaugleitung der Verbrennungskraftmaschine eingeleitet, um bei erhöhtem Frischgasbedarf der Verbrennungskraftmaschine diesen zu decken. Dieses erfolgt mittels eines Bauteils, welches in der Ansaugleitung zwischen dem Verdichter des Turboladers und dem Ansaugkrümmer angeordnet ist, und welches einen Druckluftanschluss und eine gesteuerte Klappe aufweist. Bei Zuführung von Druckluft wird die gesteuerte Klappe geschlossen, so dass die Druckluft nicht in den Verdichter des Abgasturboladers sondern gerichtet in die Ansaugleitung strömt.

DE 42 35 794 C1 beschreibt eine Abgasrückführung für eine Brennkraftmaschine, welche einen Abgasturbolader mit einer Turbine und einem Verdichter sowie eine Abgasleitung und eine Ladeluftleitung aufweist. Eine Abgasrückführungsleitung verbindet die Abgasleitung vor der Turbine mit der Ladeluftleitung nach dem Verdichter. Es ist eine Durchflussreguliereinrichtung vorgesehen, mit welcher die Menge des aus der Abgasrückführungsleitung strömenden Abgases regelbar ist. Die Durchflussreguliereinrichtung besteht aus einer Parallelschaltung einer Drosseleinrichtung und eines Ejektors, der auch eine Venturianordnung aufweisen kann, mit einem Einströmstutzen, einem Ausströmstutzen und einem Saugstutzen. Die Drosseleinrichtung befindet sich in der Ladeluftleitung nach dem Verdichter, und der Ejektor ist in einer Bypassleitung angeordnet. Der Einströmstutzen und der Ausströmstutzen sind mit der Ladeluftleitung und der Saugstutzen mit der Abgasrückführungsleitung verbunden. Unabhängig vom Druck des Abgases in der Abgasleitung ist eine gesonderte Menge Abgas in die Ladeluftleitung rückführbar. Der Druck in der Abgasleitung muss nicht betriebsnotwendig höher sein als der Druck in der Ladeluftleitung. Bei einem absinkenden Abgasdruck unter den Druck der Ladeluft wird bei gewünschter Abgasrückführung die Drosseleinrichtung soweit abgeriegelt, dass die Ladeluft sowohl durch die Drosseleinrichtung als auch durch die Bypassleitung mit dem Ejektor strömt. Die Strömung durch den Ejektor erzeugt einen Unterdruck, durch welchen das rückzuführende Abgas mit der Ladeluft gemischt und in die Ansaugleitung der Brennkraftmaschine strömt. Eine Abgasrückführung erfolgt hauptsächlich im Teillastbereich der Brennkraftmaschine.

EP 1 213 467 A beschreibt ein Venturi-Bypass-System für Abgasrückführung für eine Verbrennungsmaschine mit einem Abgasturbolader. Vor einer Turbine des Abgasturboladers ist eine Abgasleitung in eine Abgasrückführungsleitung verzweigt. Die Abgasrückführungsleitung ist mit einem Ventil und einem Kühler versehen und an einer Venturieinrichtung angeschlossen. Die Venturieinrichtung ist in einer Ladeluftleitung hinter einem Ladeluftkühler stromabwärts von einem Verdichter des Abgasturboladers angeordnet. Die Ladeluftleitung ist mit einer Ansaugleitung der Verbrennungsmaschine verbunden. Die Venturieinrichtung ist außerdem durch einen Bypass mit einem Bypassventil überbrückt. Durch Einstellung des Bypassventils und entsprechender Steuerung des Ventils in der Abgasrückführungsleitung kann ein rückzuführender Abgasstrom in die Ansaugleitung gesteuert werden. Dabei wird der Druck, welcher eine Ansaugung des Abgases aus der Abgasrückführungsleitung durch die Venturieinrichtung bewirkt, mittels der vom Verdichter komprimierten Ladeluft erzeugt.

Es ist daher die Aufgabe der vorliegenden Erfindung, ein Verfahren und eine Vorrichtung zum Verbessern einer Abgasrückführung bereitzustellen, wobei die obigen Nachteile behoben beziehungsweise bedeutend verringert sind und weitere Vorteile geschaffen sind.

Die Aufgabe wird mit einem Verfahren mit den Merkmalen des Anspruchs 1 und durch eine Vorrichtung mit den Merkmalen des Anspruchs 6 gelöst.

Ein Grundgedanke der Erfindung besteht darin, dass ein beim Einblasen von Druckluft in die Ansaugleitung der Verbrennungskraftmaschine entstehender Unterdruck zum Ansaugen von rückgeführtem Abgas verwendet wird.

Dadurch wird vorteilhaft erreicht, dass die in instationären Betriebsbereichen der Verbrennungskraftmaschine auftretenden Zustände mit Abgasen mit zu hohen Stickstoffoxidgehalten beseitigt bzw. erheblich verringert werden.

Ein erfindungsgemäßes Verfahren zum Verbessern einer Abgasrückführung einer Verbrennungskraftmaschine, insbesondere eines Dieselmotors, mit einem Abgasturbolader weist die Verfahrensschritte auf: Ermitteln von Betriebsparametern der Verbrennungsmaschine zum Bestimmen von Druckwerten des Abgases; gesteuertes Zuführen von Druckluft anhand der so bestimmten Druckwerte des Abgases zum Erzeugen eines Unterdrucks in einem Zuführabschnitt einer Gaszuführeinrichtung; Ansaugen einer Teilmenge von Abgas der Verbrennungskraftmaschine in den Zuführabschnitt der Gaszuführeinrichtung mittels des erzeugten Unterdrucks; und Rückführen der so angesaugten Teilmenge des Abgases über eine mit der Gaszuführeinrichtung verbundene Ansaugleitung in die Verbrennungskraftmaschine.

Die Druckluft wird mit einem hohen Druck über ein gesteuertes Ventil, zum Beispiel ein Magnet- oder Pneumatikventil, eingeblasen. Dabei entstehen unmittelbar hinter dem Auslass des Ventils in einem kleinem Bereich sehr hohe Strömungsgeschwindigkeiten, vorzugsweise Schallgeschwindigkeit, der eingeblasenen Druckluft. In diesem Bereich herrscht dann ein erheblich geringerer Druck als in der Ansaugleitung der Verbrennungskraftmaschine.

In einer weiteren Ausführung ist es bevorzugt, diesen Bereich als Venturianordnung auszubilden, wodurch der entstehende Unterdruck besonders stark ausgeprägt wird. In diesen Unterdruckbereich wird die Teilmenge des rückgeführten Abgases durch den Unterdruck angesaugt. Als Alternative kann auch eine Injektorpumpenanordnung Verwendung finden.

Insbesondere bei einem Betriebszustand der Verbrennungskraftmaschine, in welchem der Abgasdruck niedrig ist, erfolgt das Einblasen von Druckluft mit Ansaugen von rückzuführendem Abgas. Ein Einschalten des Druckluftventils erfolgt, wenn Druckwerte des Abgases, die direkt oder indirekt gemessen, einen vorher festlegbaren Wert unterschreiten. Dann baut sich der Unterdruck auf und ein Rückführventil in der Abgasrückführung wird durch Einschalten so geöffnet, dass die rückzuführende Teilmenge von Abgas angesaugt wird.

Das rückzuführende angesaugte Abgas wird zusammen mit der Druckluft in die Ansaugleitung der Verbrennungskraftmaschine eingeblasen. Damit die Druckluft und das angesaugte Abgas gerichtet in die Ansaugleitung geleitet werden, kann ein Stellelement vorgesehen sein, welches die Strömung gerichtet in die Ansaugleitung lenkt.

Eine erfindungsgemäße Vorrichtung zur Verbesserung einer Abgasrückführung einer Verbrennungskraftmaschine, insbesondere eines Dieselmotors, mit einem Abgasturbolader, weist Folgendes auf: eine Abgasrückführungseinrichtung, die mit einer Abgasleitung und einer Ansaugleitung der Verbrennungskraftmaschine in Verbindung steht; ein in der Abgasrückführungseinrichtung angeordnetes Rückführventil zur gesteuerten Einschaltung einer Abgasrückführung; und eine Gaszuführeinrichtung, welche zwischen der Ansaugleitung und einem Verdichter des Abgasturboladers angeordnet und mit einer Druckluftleitung gekoppelt ist, wobei die Gaszuführeinrichtung weiterhin einen Ansaugkanal mit Anschluss für die Abgasrückführungseinrichtung aufweist, und wobei der Ansaugkanal in einen Zuführabschnitt der Druckluftleitung einmündet.

Eine bevorzugte Ausführung sieht vor, dass die Gaszuführeinrichtung Messeinrichtungen zur Messung von Strömungsparametern in der Gaszuführeinrichtung in Strömungsrichtung vor und hinter dem Stellelement aufweist. Dadurch können auf einfache Weise Messwerte zum Beispiel über den aktuellen Ansaugdruck in der Ansaugleitung gewonnen werden, wobei die Messeinrichtungen zum Beispiel Drucksensoren sind. Aus dem Ansaugdruck und weiteren Messwerten, zum Beispiel von der Motorsteuerung wie Drehzahl der Verbrennungskraftmaschine, kann auch auf den Abgasdruck geschlossen werden.

In einer weiteren Ausführung ist die Gaszuführeinrichtung ein Frischgasleitungsabschnitt einer Einrichtung zur Frischluftversorgung zum gesteuerten Einblasen von Druckluft. Hierbei ergibt sich eine Kombination der Vorteile der Drucklufteinblasung hinsichtlich des so genannten "Turbolochs" als auch der verbesserten Abgasrückführung.

Die Erfindung wird nun anhand von Ausführungsbeispielen mit Bezug auf die beigefügten Zeichnungen näher erläutert. Hierbei zeigt:
- Fig. 1: eine schematische Darstellung einer Verbrennungskraftmaschine mit einem Abgasturbolader, einer Abgasrückführung und einer erfindungsgemäßen Vorrichtung zur Verbesserung der Abgasrückführung;
- Fig. 2: eine schematische Schnittdarstellung eines ersten Ausführungsbeispiels einer Gaszuführeinrichtung der erfindungsgemäßen Vorrichtung; und
- Fig. 3: eine vergrößerte schematische Schnittdarstellung eines Anschlussabschnitts X nach Fig. 2 eines zweiten Ausführungsbeispiels der Gaszuführeinrichtung der erfindungsgemäßen Vorrichtung.

Gleiche Bauelemente bzw. Funktionseinheiten mit gleicher Funktion sind mit gleichen Bezugszeichen in den Figuren gekennzeichnet.

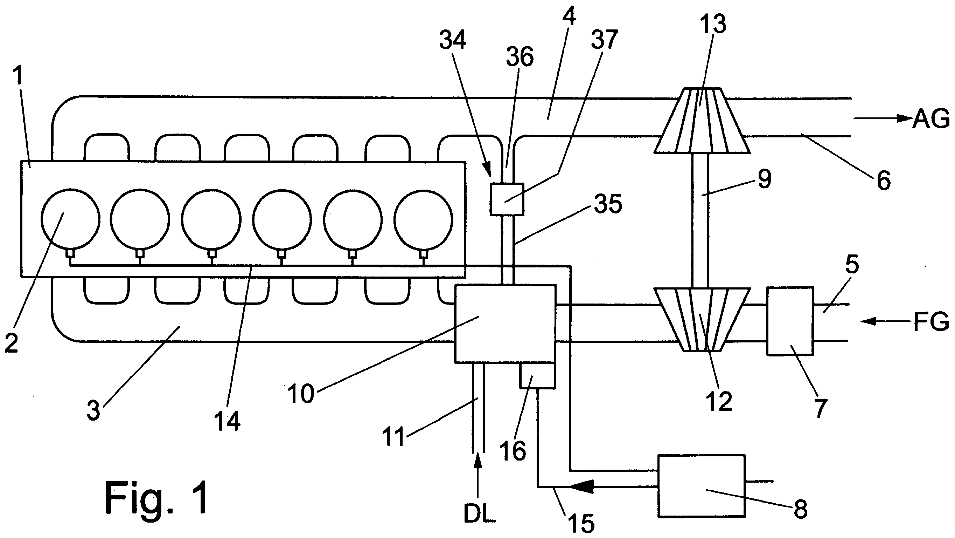

Fig. 1 zeigt eine schematische Darstellung einer Verbrennungskraftmaschine 1 mit einem Abgasturbolader 9, einer Abgasrückführungseinrichtung 34 und einer erfindungsgemäßen Vorrichtung zur Verbesserung der Abgasrückführung. Die Verbrennungskraftmaschine 1 ist in diesem Beispiel ein Dieselmotor mit sechs Zylindern 2, einer Ansaugleitung 3 und einer Abgasleitung 4. Die Ansaugleitung 3 ist über eine Gaszuführeinrichtung 10 mit einem Verdichter 12 des Abgasturboladers 9 verbunden, welche über einen Luftfilter 7 am Lufteinlass 5 für Frischgas FG angeschlossen ist. Der Verdichter 12 des Abgasturboladers 9 ist mit einer Abgsturbine13 gekoppelt, welche in der Abgasleitung 4 vor einem Abgasauslass 6 für Abgas AG der Verbrennungskraftmaschine 1 angeordnet ist und von dem Abgas AG angetrieben wird.

Weiterhin ist die Abgasleitung 4 über die Abgasrückführungseinrichtung 34 mit der Ansaugleitung 3 über die Gaszuführeinrichtung 10 gekoppelt, welche weiter unten noch ausführlich beschrieben wird. Die Abgasrückführungseinrichtung 34 ist in einen ersten und zweiten Zuleitungsabschnitt 35 und 36 unterteilt. Zwischen diesen Zuleitungen ist ein Rückführventil 37 angeordnet, welches zum Beispiel ein Magnetventil oder ein Pneumatikventil sein kann.

Die Gaszuführeinrichtung 10 ist weiterhin mit einer Druckluftleitung 11 zur Zuführung von Druckluft DL verbunden. Die Druckluft DL ist zum Beispiel in einem Druckluftbehälter gespeichert und/oder wird von einer Druckluftanlage (nicht gezeigt) erzeugt. Zum Beispiel kann dieses eine in einem Nutzfahrzeug vorhandene Drucklufterzeugungsanlage oder eine zusätzliche Anlage sein.

Ein Motorsteuergerät 8 ist mit Einspritzanlagen der Zylinder 2 verbunden. Hierzu ist nur eine Steuerleitung 14 symbolisch angedeutet. Eine weitere Verbindung 15 ist an einer Steuereinheit 16 der Gaszuführeinrichtung 10 angeschlossen. Das Motorsteuergerät 8 steuert die Verbrennungskraftmaschine in bekannter Weise und wird nicht weiter erläutert. Über die Verbindung 15 erhält es weitere Messdaten der Gaszuführeinrichtung 10, was weiter unten noch im Detail erläutert wird.

Die Gaszuführeinrichtung 10 ist in diesem Beispiel ein Frischgasleitungsabschnitt, wie er in der DE 10 2006 008 783 A1 und DE 10 2006 008 785 A1 im Zusammenhang mit einer zugehörigen Drucklufterzeugung beschrieben wird. Auf eine ausführliche Erläuterung wird daher hier verzichtet.

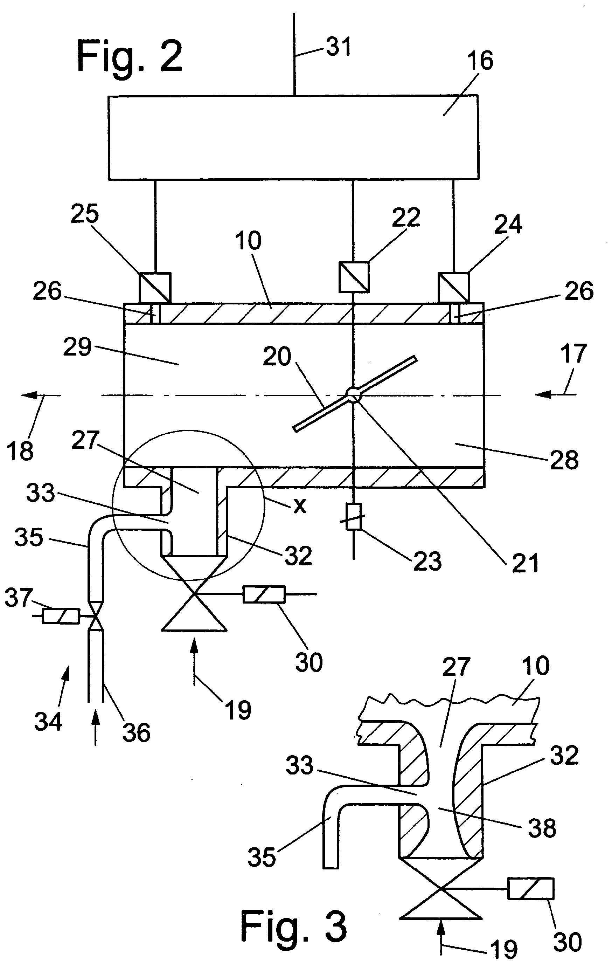

Die Gaszuführeinrichtung 10 ist zusammen mit zugehörigen Funktionseinheiten in Fig. 2 in einer Längsschnittansicht in einem ersten Ausführungsbeispiel schematisch dargestellt.

Die Gaszuführeinrichtung 10 besteht aus einem rohrförmigen Körper, welcher mit seiner rechten Seite mit einem Einströmabschnitt 28 für eine Frischgaseinströmung 17 mit dem Verdichter 12 des Abgasturboladers 9 (siehe Fig. 1) verbunden ist. In Strömungsrichtung (in der Fig. 2 von rechts nach links) ist weiterhin ein Stellelement 20 in Form einer Klappe um eine Drehachse 21 schwenkbar angeordnet. Das Stellelement 20 ist mit einer Verstelleinheit 22 und einem Positionsgeber 23 gekoppelt. Mit dem Stellelement 20 ist der Durchgangsquerschnitt des rohrförmigen Körpers der Gaszuführeinrichtung 10 und somit die Einströmung 17 veränderlich ausgebildet.

Im linken Bereich der Gaszuführungseinrichtung 10 ist ein Ausströmabschnitt 29 angeordnet, welcher mit der Ansaugleitung 3 für eine Ausströmung 18 verbunden ist (siehe Fig. 1). In dem Ausströmabschnitt 29 ist in diesem Beispiel an der Unterseite ein Anschlussabschnitt 32 mit einem Zuführabschnitt 27 angeordnet, wobei der Zuführabschnitt 27 kanalförmig ausgebildet ist und mit einem Ende mit dem Ausströmabschnitt 29 kommuniziert. Das andere Ende des Zuführabschnitts 27 ist mit einem Ventil 30 verbunden, welches hier als Elektromagnetventil ausgebildet ist und mit seiner Anschlussseite für eine Drucklufteinströmung 19 der Druckluftleitung 11 (siehe Fig. 1) ausgebildet ist. Oberhalb des Auslasses des Ventils 30 ist der Anschlussabschnitt 32 mit einem Ansaugkanal 33 verbunden, welcher mit dem ersten Zuleitungsabschnitt 35 der Abgasrückführungseinrichtung 34 kommuniziert. An diesen ersten Zuleitungsabschnitt 35 schließt sich das Rückführventil 37 und der zweite Zuleitungsabschnitt 36 an, der mit der Abgasleitung 4 verbunden ist (siehe Fig. 1), was der Pfeil symbolisieren soll. Das Rückführventil 37 ist in diesem Beispiel ebenfalls ein Elektromagnetventil.

Die Gaszuführeinrichtung 10 weist außerdem in Strömungsrichtung vor dem Stellelement 20 im Einströmabschnitt 28 und in Strömungsrichtung hinter dem Stellelement 20 im Ausströmabschnitt 29 jeweils einen Messkanal 26 auf. An jedem Messkanal 26 ist eine Messeinrichtung 24, 25 angeschlossen, welche in diesem Beispiel jeweils ein Drucksensor ist.

Die Steuereinheit 16 der Gaszuführungseinrichtung 10 ist mit der Verstelleinheit 22 und dem Positionsgeber 23 des Steuerelementes 20, den Messeinrichtungen 24, 25 und mit den Ventilen 30 und 37 verbunden. Weiterhin ist sie mit dem Motorsteuergerät 8 verbunden und besitzt einen Anschluss 31 für weitere Anbindungen, wie zum Beispiel Drucksensoren, Temperatursensoren usw. der Abgasleitung und/oder des Abgasturboladers.

Die Funktion dieser Vorrichtung wird nun beschrieben.

Wenn der Abgasdruck auf Grund einer bestimmten Betriebsbedingung der Verbrennungskraftmaschine 1 abnimmt, wird dies von Sensoren der Verbrennungskraftmaschine 1, wie zum Beispiel Sensoren für Drehzahl, Druck, Temperatur festgestellt. Diese Messwerte sind im Motorsteuergerät 8 und - bei Vorhandensein eines Bussystems im Fahrzeug - auf diesem Bus verfügbar und von der Steuereinheit 16 abrufbar, zum Beispiel über die Verbindung 15 mit dem Motorsteuergerät 8 und/oder über den Anschluss 31. Aus diesen Werten ermittelt die Steuereinheit 16 im Vergleich mit vorher festgelegten Schwellwerten, dass der Abgasdruck diese Schwellwerte unterschritten hat und eine Abgasrückführung damit nicht mehr möglich ist. Nun wird das Ventil 30 von der Steuereinheit aufgesteuert, die einströmende Druckluft DL steht unter einem sehr hohen Druck und erzeugt durch ihre hohe Strömungsgeschwindigkeit, die vorzugsweise Schallgeschwindigkeit ist, am Auslass des Ventils 30 im Zuführabschnitt 27 einen hohen Unterdruck. Dann öffnet das Rückführventil 37, gesteuert durch ein weiteres Signal von der Steuereinheit 16, und eine Teilmenge von Abgas wird durch die Abgasrückführungseinrichtung 34 in den Zuführabschnitt 27 angesaugt, und von der einströmenden Druckluft mitgerissen. Gleichzeitig gibt die Steuereinheit 16 ein Signal an die Verstelleinheit 22 des Steuerelementes 20 zum Schließen bzw. zum Verkleinern des Querschnitts zum Einströmabschnitt 28, so dass die Strömung der Druckluft mit dem rückgeführten Abgas als gerichtete Ausströmung 18 in die Ansaugleitung 3 in die Verbrennungskraftmaschine 1 geleitet wird. Bei sich ändernden Betriebsbedingungen werden die Ventile 30 und 37 wieder geschlossen und das Steuerelement 20 entsprechend zur Vergrößerung des Querschnitts zum Einströmabschnitt 29 verstellt.

Somit ist es möglich, eine Abgasrückführung auch bei niedrigem Abgasdruck zu erhalten, woraus eine verringerter Stickstoffoxidgehalt in den Abgasen AG auch bei instationärem Betrieb der Verbrennungskraftmaschine 1 erreicht wird.

Zur Erhöhung des Unterdrucks im Zuführabschnitt 27 kann dessen Geometrie so angepasst werden, dass eine besonders günstige Unterdruck- und Ansaugbedingung für das rückgeführte Abgas entsteht. Hierzu zeigt Fig. 2 eine Schnittdarstellung des Bereiches X der Fig. 2 in einem zweiten Ausführungsbeispiel der erfindungsgemäßen Vorrichtung. Der Zuführabschnitt 27 ist hierbei als eine Venturianordnung 38 ausgebildet. Im Bereich der größten Strömungsgeschwindigkeit, in welchem der größte Unterdruck herrscht, wenn das Ventil 30 geöffnet ist und Druckluft einströmt, ist der Ansaugkanal 33 mit angeschlossener ersten Zuleitung 35 der Abgasrückführungseinrichtung 34 angeordnet, wodurch durch den Unterdruck mehr Abgas bei niedrigem Abgasdruck in der Abgasleitung 4 (Fig. 1) rückführbar ist und somit der Stickstoffoxidgehalt der Abgase AG weiter verringert wird.

Die Erfindung ist nicht auf die oben beschriebenen Ausführungsbeispiele beschränkt. Sie ist im Rahmen der beigefügten Ansprüche modifizierbar.

So ist es beispielsweise denkbar, dass die geometrische Ausbildung des Zuführabschnitts 27 andere Anordnungen als Venturianordnungen aufweist. Zum Beispiel kann eine Injektorpumpenanordnung (nach Art einer Wasserstrahlpumpe) Verwendung finden, wobei die zugeführte Druckgaseinströmung 19 durch den Injektor geleitet wird. Der Injektor ragt dabei vom unteren Ende des Anschlussabschnitts 32 her in den Zuführabschnitt hinein, was nicht gezeigt, aber leicht vorstellbar ist.

Eine weitere strömungsgünstige Gestaltung aller Kanäle, Einmündungen und Anschlüsse ergibt geringere Strömungswiderstände, insbesonder im Bereich hohen Drucks bzw. Unterdrucks.

Die Ventile können auch pneumatisch oder elektro-pneumatisch steuerbar sein.

Die Gaszuführeinrichtung 10 kann ein Frischgasleitungsabschnitt der in der DE 10 2006 008 783 A1 und DE 10 2006 008 785 A1 beschriebenen Drucklufteinrichtung sein und mit dieser gekoppelt sein.

### Bezugszeichenliste

- 1: Verbrennungskraftmaschine
- 2: Zylinder
- 3: Ansaugleitung
- 4: Abgasleitung
- 5: Lufteinlass
- 6: Abgasauslass
- 7: Luftfilter
- 8: Motorsteuergerät
- 9: Abgasturbolader
- 10: Gaszuführeinrichtung
- 11: Druckluftleitung
- 12: Verdichter
- 13: Abgasturbine
- 14: Steuerleitung
- 15: Verbindung
- 16: Steuereinheit
- 17: Frischgaseinströmung
- 18: Ausströmung
- 19: Drucklufteinströmung
- 20: Stellelement
- 21: Drehachse
- 22: Verstelleinheit
- 23: Positionsgeber
- 24: Erste Messeinrichtung
- 25: Zweite Messeinrichtung
- 26: Messkanal
- 27: Zuführabschnitt
- 28: Einströmabschnitt
- 29: Ausströmabschnitt
- 30: Ventil
- 31: Anschluss
- 32: Anschlussabschnitt
- 33: Ansaugkanal
- 34: Abgasrückführungseinrichtung
- 35: Erster Zuleitungsabschnitt
- 36: Zweiter Zuleitungsabschnitt
- 37: Rückführventil
- 38: Venturianordnung
- AG: Abgas
- DL: Druckluft
- FL: Frischgas

## Patentansprüche

1. Verfahren zum Verbessern einer Abgasrückführung einer Verbrennungskraftmaschine (1), insbesondere eines Dieselmotors, mit einem Abgasturbolader (9), welches folgende Verfahrensschritte aufweist:
(i) Ermitteln von Betriebsparametern der Verbrennungsmaschine (1) zum Bestimmen von Druckwerten des Abgases (AG);
(ii) gesteuertes Zuführen von Druckluft (DL) anhand der so bestimmten Druckwerte des Abgases (AG) zum Erzeugen eines Unterdrucks in einem Zuführabschnitt (27) einer Gaszuführeinrichtung (10);
(iii) Ansaugen einer Teilmenge von Abgas (AG) der Verbrennungskraftmaschine (1) in den Zuführabschnitt (27) der Gaszuführeinrichtung (10) mittels des erzeugten Unterdrucks; und
(iv) Rückführen der so angesaugten Teilmenge des Abgases (AG) über eine mit der Gaszuführeinrichtung (10) verbundene Ansaugleitung (3) in die Verbrennungskraftmaschine (1),
wobei das gesteuerte Zuführen von Druckluft (DL) durch Einschalten eines Ventils (30) erfolgt, wenn ein gemessener Druckwert des Abgases (AG) einen vorher festgelegten Vergleichswert unterschreitet
**dadurch gekennzeichnet, dass**
die Druckluft (DL) nach dem Ventil (30) durch eine Venturianordnung (38) und/oder eine Injektorpumpe geleitet wird, in welche die angesaugte Teilmenge von Abgas (AG) geleitet wird, wobei der Zuführabschnitt (27) die Venturianordnung (38) und/oder die Injektorpumpe aufweist.

2. Verfahren nach Anspruch 1, **dadurch gekennzeichnet, dass** nach dem Einschalten des Ventils (30) und dem dadurch erfolgten Erzeugen des Unterdrucks das Ansaugen der Teilmenge von Abgas (AG) nach Einschalten eines Rückführventils (37) erfolgt.

3. Verfahren nach einem der vorhergehenden Ansprüche, **dadurch gekennzeichnet, dass** die angesaugte Teilmenge von Abgas (AG) mittels eines Stellelementes (20) gerichtet in die Ansaugleitung (3) geleitet wird.

4. Verfahren nach einem der vorhergehenden Ansprüche, **dadurch gekennzeichnet, dass** die Druckluft (DL) mit hohem Druck über das Ventil (30) in den Zuführabschnitt (27) eingeblasen und unmittelbar hinter dem Auslass des Ventils (30) durch eine angepasste Geometrie des Zuführabschnitts (27) mit Schallgeschwindigkeit zugeführt wird.

5. Vorrichtung zur Verbesserung einer Abgasrückführung einer Verbrennungskraftmaschine (1), insbesondere eines Dieselmotors, mit einem Abgasturbolader (9), welche Folgendes aufweist:
eine Abgasrückführungseinrichtung (34), die mit einer Abgasleitung (4) und
einer Ansaugleitung (3) der Verbrennungskraftmaschine (1) in Verbindung steht;
ein in der Abgasrückführungseinrichtung (34) angeordnetes Rückführventil (37) zur gesteuerten Einschaltung einer Abgasrückführung; und
eine Gaszuführeinrichtung (10), welche zwischen der Ansaugleitung (3) und einem Verdichter (12) des Abgasturboladers (9) angeordnet und mit einer Druckluftleitung (11) gekoppelt ist,
wobei die Gaszuführeinrichtung (10) weiterhin einen Ansaugkanal (33) mit Anschluss für die Abgasrückführungseinrichtung (34) aufweist, und
wobei der Ansaugkanal (33) in einen Zuführabschnitt (27) der Druckluftleitung (11) einmündet,
und wobei der Zuführabschnitt (27) über ein Ventil (30) mit der Druckluftleitung (11) verbunden ist,
**dadurch gekennzeichnet, dass**
der Zuführabschnitt (27) eine Venturianordnung (38) aufweist.

6. Vorrichtung zur Verbesserung einer Abgasrückführung einer Verbrennungskraftmaschine (1), insbesondere eines Dieselmotors, mit einem Abgasturbolader (9), welche Folgendes aufweist:
eine Abgasrückführungseinrichtung (34), die mit einer Abgasleitung (4) und einer Ansaugleitung (3) der Verbrennungskraftmaschine (1) in Verbindung steht;
ein in der Abgasrückführungseinrichtung (34) angeordnetes Rückführventil (37) zur gesteuerten Einschaltung einer Abgasrückführung; und
eine Gaszuführeinrichtung (10), welche zwischen der Ansaugleitung (3) und einem Verdichter (12) des Abgasturboladers (9) angeordnet und mit einer Druckluftleitung (11) gekoppelt ist,
wobei die Gaszuführeinrichtung (10) weiterhin einen Ansaugkanal (33) mit Anschluss für die Abgasrückführungseinrichtung (34) aufweist, und
wobei der Ansaugkanal (33) in einen Zuführabschnitt (27) der Druckluftleitung (11) einmündet,
und wobei der Zuführabschnitt (27) über ein Ventil (30) mit der Druckluftleitung (11) verbunden ist,
**dadurch gekennzeichnet, dass**
der Zuführabschnitt (27) eine Injektorpumpenanordnung aufweist, wobei ein Injektor die Druckgaseinströmung (19) leitet.

7. Vorrichtung nach Anspruch 5 oder 6, **dadurch gekennzeichnet, dass** die Gaszuführeinrichtung (10) mit einem Stellelement (20) zu einer in die Ansaugleitung (3) gerichteten Rückführung von Abgas ausgebildet ist.

8. Vorrichtung nach Anspruch 7 **dadurch gekennzeichnet, dass** die Gaszuführeinrichtung (10) Messeinrichtungen (24, 25) zur Messung von Strömungsparametern in der Gaszuführeinrichtung (10) in Strömungsrichtung vor und hinter dem Stellelement (20) aufweist.

9. Vorrichtung nach einem der Ansprüche 5 bis 8, **dadurch gekennzeichnet, dass** die Gaszuführeinrichtung (10) ein Frischgasleitungsabschnitt einer Einrichtung zur Frischluftversorgung zum gesteuerten Einblasen von Druckluft (DL) ist.

## Claims

1. Method for improving exhaust gas recirculation in an internal combustion engine (1), in particular a diesel engine, having an exhaust gas turbocharger (9), which comprises the following method steps:
(i) determining operating parameters of the internal combustion engine (1) in order to determine pressure values of the exhaust gas (AG);
(ii) controlled feeding of compressed air (DL) based on the pressure values thus determined for the exhaust gas (AG) in order to generate a vacuum in a feed section (27) of a gas feed device (10);
(iii) sucking a portion of exhaust gas (AG) of the internal combustion engine (1) into the feed section (27) of the gas feed device (10) by means of the vacuum generated; and
(iv) recirculating the thus sucked-in portion of the exhaust gas (AG) into the internal combustion engine (1) via an intake line (3) connected to the gas feed device (10),
wherein the controlled feeding of compressed air (DL) is performed by switching on a valve (30) when a measured pressure value of the exhaust gas (AG) falls below a predefined comparison value, **characterized in that** the compressed air (DL) downstream of the valve (30) is guided through a venturi arrangement (38) and/or an injector pump into which the sucked-in portion of exhaust gas (AG) is guided, wherein the feed section (27) comprises the venturi arrangement (38) and/or the injector pump.

2. Method according to Claim 1, **characterized in that**, after the valve (30) has been switched on and the vacuum has been generated as a result, the portion of exhaust gas (AG) is sucked in after switching on a recirculating valve (37).

3. Method according to one of the preceding claims, **characterized in that** the sucked-in portion of exhaust gas (AG) is directionally guided into the intake line (3) by means of a setting element (20).

4. Method according to one of the preceding claims, **characterized in that** the compressed air (DL) is blown in at a high pressure via the valve (30) into the feed section (27) and is fed in at the speed of sound directly downstream of the outlet of the valve (30) by an adapted geometry of the feed section (27).

5. Apparatus for improving exhaust gas recirculation in an internal combustion engine (1), in particular a diesel engine, having an exhaust gas turbocharger (9), which comprises the following:
an exhaust gas recirculation device (34) which is connected to an exhaust gas line (4) and to an intake line (3) of the internal combustion engine (1);
a recirculating valve (37) arranged in the exhaust gas recirculation device (34) and intended for the controlled switching on of exhaust gas recirculation; and
a gas feed device (10) which is arranged between the intake line (3) and a compressor (12) of the exhaust gas turbocharger (9) and coupled to a compressed air line (11), wherein the gas feed device (10) further comprises an intake duct (33) with a connection for the exhaust gas recirculation device (34), and
wherein the intake duct (33) leads into a feed section (27) of the compressed air line (11),
and wherein the feed section (27) is connected via a valve (30) to the compressed air line (11),
**characterized in that**
the feed section (27) comprises a venturi arrangement (38).

6. Apparatus for improving exhaust gas recirculation in an internal combustion engine (1), in particular a diesel engine, having an exhaust gas turbocharger (9), which comprises the following:
an exhaust gas recirculation device (34) which is connected to an exhaust gas line (4) and to an intake line (3) of the internal combustion engine (1);
a recirculating valve (37) arranged in the exhaust gas recirculation device (34) and intended for the controlled switching on of exhaust gas recirculation; and
a gas feed device (10) which is arranged between the intake line (3) and a compressor (12) of the exhaust gas turbocharger (9) and coupled to a compressed air line (11), wherein the gas feed device (10) further comprises an intake duct (33) with a connection for the exhaust gas recirculation device (34), and
wherein the intake duct (33) leads into a feed section (27) of the compressed air line (11),
and wherein the feed section (27) is connected via a valve (30) to the compressed air line (11),
**characterized in that** the feed section (27) comprises an injector pump arrangement, wherein an injector guides the compressed gas inflow (19).

7. Apparatus according to Claim 5 or 6, **characterized in that** the gas feed device (10) is designed with a setting element (20) for recirculating exhaust gas directionally into the intake line (3).

8. Apparatus according to Claim 7, **characterized in that** the gas feed device (10) comprises, upstream and downstream of the setting element (20) in the flow direction, measuring devices (24, 25) for measuring flow parameters in the gas feed device (10).

9. Apparatus according to one of Claims 5 to 8, **characterized in that** the gas feed device (10) is a fresh gas line section of a device for fresh air supply for blowing in compressed air (DL) in a controlled manner.

## Revendications

1. Procédé pour améliorer le recyclage des gaz d'échappement d'un moteur (1) à combustion interne, notamment d'un moteur diesel, ayant un turbocompresseur (9) à gaz d'échappement, qui a les stades de procédé suivants :
(i) détermination de paramètres de fonctionnement du moteur (1) à combustion interne pour déterminer des valeurs de pression des gaz (AG) d'échappement;
(ii) apport commandé d'air (DL) comprimé à l'aide des valeurs de pression ainsi déterminées des gaz (AG) d'échappement pour produire une dépression dans un tronçon (27) d'apport du dispositif (10) d'apport de gaz;
(iii) Aspiration d'une quantité partielle des gaz (AG) d'échappement du moteur (1) à combustion interne dans le tronçon (27) d'apport du dispositif (10) d'apport de gaz au moyen de la dépression produite et
(iv) recyclage de la quantité partielle ainsi aspirée des gaz (AG) d'échappement dans le moteur (1) à combustion interne par l'intermédiaire d'un conduit (3) d'aspiration relié au dispositif (10) d'apport de gaz;
dans lequel l'apport commandé d'air (DL) comprimé s'effectue par ouverture d'une vanne (30), si une valeur de pression mesurée des gaz (AG) d'échappement devient inférieure à une valeur de comparaison fixée à l'avance **caractérisé en ce que**
on envoie l'air (DL) comprimé après la vanne (30) dans un agencement (38) à Venturi et/ou une pompe à injecteur, dans lequel la quantité partielle aspirée des gaz (AG) d'échappement est envoyée, le tronçon (27) d'apport ayant l'agencement (38) à Venturi et/ou la pompe à injecteur.

2. Procédé suivant la revendication 1, **caractérisé en ce qu'**après l'ouverture de la vanne (30) et la production qui s'ensuit de la dépression, l'aspiration de la quantité partielle de gaz (AG) d'échappement s'effectue après l'ouverture d'un clapet (37) de retour.

3. Procédé suivant l'une des revendications précédentes, **caractérisé en ce que** l'on envoie la quantité partielle aspirée de gaz (AG) d'échappement dans le conduit (3) d'aspiration au moyen d'un élément (20) de réglage.

4. Procédé suivant l'une des revendications précédentes, **caractérisé en ce que** l'on insuffle l'air (DL) comprimé sous une pression haute, par l'intermédiaire de la vanne (30), dans le tronçon (27) d'apport et on l'envoie à la vitesse du son, immédiatement derrière la sortie de la vanne (30), par une géométrie adaptée du tronçon (27) d'apport.

5. Système d'amélioration d'un recyclage des gaz d'échappement d'un moteur (1) à combustion interne, notamment d'un moteur diesel, ayant un turbocompresseur (9) de gaz d'échappement, qui a ce qui suit :
un dispositif (34) de recyclage des gaz d'échappement, qui est en liaison avec un conduit (4) pour les gaz d'échappement et avec un conduit (3) d'aspiration du moteur (1) à combustion interne;
un clapet (37) de retour monté dans le dispositif (34) de recyclage des gaz d'échappement pour la mise en service commandée d'un recyclage des gaz d'échappement et
un dispositif (10) d'apport de gaz, qui est monté entre le conduit (3) d'aspiration et un compresseur (12) du turbocompresseur (9) à gaz d'échappement et qui est couplé à un conduit (11) pour de l'air comprimé,
dans lequel le dispositif (10) d'apport de gaz a en outre un canal (33) d'aspiration ayant un raccord pour le dispositif (34) de recyclage des gaz d'échappement et
dans lequel le canal (33) d'aspiration débouche dans un tronçon (27) d'apport du conduit (11) pour de l'air comprimé,
et dans lequel le tronçon (27) d'apport est relié au conduit (11) pour de l'air comprimé par l'intermédiaire d'une vanne (30),
**caractérisé en ce que**
le tronçon (27) d'apport a un agencement (38) à Venturi.

6. Système d'amélioration du recyclage des gaz d'échappement d'un moteur (1) à combustion interne, notamment d'un moteur diesel, ayant un turbocompresseur (9) à gaz d'échappement, qui a ce qui suit :
un dispositif (34) de recyclage des gaz d'échappement, qui est en liaison avec un conduit (4) pour les gaz d'échappement et avec un conduit (3) d'aspiration du moteur (1) à combustion interne;
un clapet (37) de retour monté dans le dispositif (34) de recyclage des gaz d'échappement pour la mise en service commandée d'un recyclage des gaz d'échappement et
un dispositif (10) d'apport de gaz, qui est monté entre le conduit (3) d'aspiration et un compresseur (12) du turbocompresseur (9) à gaz d'échappement et qui est adjoint à un conduit (11) pour de l'air comprimé,
dans lequel le dispositif (10) d'apport de gaz a en outre un canal (33) d'aspiration ayant un raccord pour le dispositif (34) de recyclage des gaz d'échappement et
dans lequel le canal (33) d'aspiration débouche dans un tronçon (27) d'apport du conduit (11) pour de l'air comprimé,
et dans lequel le tronçon (27) d'apport est relié au conduit (11) pour de l'air comprimé par l'intermédiaire d'une vanne (30),
**caractérisé en ce que**
le tronçon (27) d'apport a un agencement de pompe à injecteur, un injecteur assurant l'entrée du courant (19) des gaz d'échappement.

7. Système suivant la revendication 5 ou 6, **caractérisé en ce que** le dispositif (10) d'apport de gaz est constitué avec un élément (20) de réglage pour un recyclage dirigé dans le conduit (3) d'aspiration des gaz d'échappement.

8. Système suivant la revendication 7, **caractérisé en ce que** le dispositif (10) d'apport de gaz a des dispositifs (24, 25) de mesure pour mesurer des paramètres d'écoulement dans le dispositif (10) d'apport de gaz, dans le sens d'écoulement, avant et après l'élément (20) de réglage.

9. Système suivant l'une des revendications 5 à 8, **caractérisé en ce que** le dispositif (10) d'apport de gaz est un tronçon de conduit de gaz frais d'un dispositif d'alimentation en gaz frais pour l'insufflation commandée d'air (DL) comprimé.
